# EUROPÄISCHE PATENTSCHRIFT

(11) **EP 1 018 052 B1**
(45) Veröffentlichungstag und Bekanntmachung des Hinweises auf die Patenterteilung: **08.01.2003**
(21) Anmeldenummer: 98954222.0
(22) Anmeldetag: 24.09.1998
(51) Int. Cl.: G02B 6/42

(54) **ELEKTROOPTISCHE ANORDNUNG**
ELECTRO-OPTICAL ARRANGEMENT
ENSEMBLE ELECTRO-OPTIQUE

(30) Priorität: 24.09.1997 DE 19742895
(43) Veröffentlichungstag der Anmeldung: 12.07.2000
(73) Patentinhaber: Infineon Technologies AG, 81669 München (DE)
(72) Erfinder: MEYER-GÜLDNER, Frank, D-13053 Berlin (DE); KREIER, Michael, D-13407 Berlin (DE); KROPP, Jörg-Reinhardt, D-12355 Berlin (DE)
(74) Vertreter: Müller, Wolfram Hubertus, Dipl.-Phys.
(86) Internationale Anmeldenummer: DE9802851
(87) Internationale Veröffentlichungsnummer: WO99015927

(56) Entgegenhaltungen:
- DE-C- 4 009 323
- US-A- 4 732 446
- US-A- 5 028 110
- US-A- 5 201 018
- US-A- 5 230 030

## Beschreibung

Die Erfindung liegt auf dem Gebiet der optischen Datenübertragungstechnik und betrifft elektrooptische Kopplungsanordnungen, mit denen anordnungsseitige elektrooptische Wandler wie Sender (z. B. Laserdiode) oder Empfänger (z. B. Fotodiode) mit Lichtwellenleitern koppelbar sind. Ein als Sender ausgebildeter elektrooptischer Wandler wandelt bei elektrischer Ansteuerung die elektrischen Signale in optische Signale, die in Form von Lichtsignalen ausgesendet werden. Ein als Empfänger ausgebildeter Wandler wandelt bei Beaufschlagung mit optischen Signalen diese in entsprechende elektrische ausgangsseitig abgreifbare Signale. Der Bereich eines Wandlers, in dem die vorbeschriebenen Signalwandlungen erfolgen, wird nachfolgend auch als optisch aktive Zone bezeichnet.

Eine bekannte elektrooptische Anordnung dieser Art weist eine Kopplungseinrichtung auf, der eingangsseitig ein Faserarray und ausgangsseitig eine Laser- oder Empfangsdiodenzeile zugeordnet ist. Die Anschlußenden oder Anschluß-Kopplungsflächen eines solchen Faserarrays bilden optische Anschlüsse, die in einem vorgegebenen Abstand zueinander beabstandet sind. Die Kopplungseinrichtung enthält auf einem ebenen Träger strahlenförmig aufgefächerte Wellenleiter, die an ihren Enden derart bearbeitet sind, daß eingangsseitig vom Faserarray parallel ankommende Lichtstrahlen in die Wellenleiter umgelenkt und ausgangsseitig in die Empfangsdiodenzeile eingekoppelt werden. Infolge der aufgefächerten Anordnung der Wellenleiter ist deren ausgangsseitiger Abstand zueinander größer als der eingangsseitige Abstand. Die Wellenleiter bilden dabei Teilabschnitte von optischen Kopplungspfaden zwischen den optischen Anschlüssen des Faserarrays und den optisch aktiven Zonen der Diodenzeile. Das Maß der Auffächerung der Kopplungspfade ist von der Länge der Wellenleiter abhängig und ist aufgrund des Aperturwinkels der Wellenleiter nur begrenzt möglich(DE 40 09 323 C1).

An sich sind weiterhin als optische Lichtbündelteiler bezeichnete Formkörper bekannt, die der Teilung eines einzigen eingehenden Lichtstrahls in Teilstrahlen mit einer gewünschten Intensitätsverteilung oder der Zusammenführung von Teilstrahlen zu einem gemeinsamen Strahl dienen (DE 41 13 795 C1 und US 5,028,110). Diese Formkörper sind in Teilbereichen ihrer Oberfläche lichtbrechend oder lichtreflektierend gestaltet, wobei eingangsseitig eine Aufweitungsoptik, ausgangsseitig Fokussieroptiken und dazwischen eine Strahlteilereinheit angeordnet sind.

In der optischen Datenübertragungstechnik besteht zunehmend Bedarf, immer höhere Übertragungskapazitäten auf immer geringerem Raum und zu möglichst geringen Kosten zu realisieren. Dies gilt insbesondere für mehrkanalige elektrooptische Anordnungen, an die jeweils mehrere Lichtwellenleiter oder andere Kopplungspartner anzuschließen sind. Die Anschlüsse sollen dabei zueinander einen vergleichsweise geringen Abstand (auch als Teilung oder Raster bezeichnet) aufweisen. Damit müssen auch die optischen Kopplungspfade näher zusammenrücken, so daß nach den bisherigen Konstruktionsprinzipien auch die optisch aktiven Zonen der Wandler dichter beieinander anzuordnen wären. Dadurch treten jedoch verstärkt Probleme des optischen und/oder elektrischen Übersprechens, ein hoher Justageaufwand sowie auf eine aufwendige Bauteilminiaturisierung auf. Das Problem der gegenseitigen Kanalbeeinflussung (Übersprechen) ist bei Empfänger/Sender-Modulen (Transceivern) mit dicht nebeneinander liegenden Sende- und Empfangskanälen besonders schwerwiegend, weil die elektrischen Pegelunterschiede zwischen Sende- und Empfangskanälen oft mehrere Größenordnungen betragen.

Ausgehend von einer Anordnung mit den Merkmalen des Oberbegriffs des Anspruchs 1 (DE 40 09 323 C1 ) liegt der Erfindung die Aufgabe zugrunde, eine elektrooptisch Anordnung zu schaffen, die unter Vermeidung eines unzulässig hohen optischen und/oder elektrischen Übersprechens ohne hohen Justageaufwand und aufwendige Bauteilminiaturisierung und damit preisgünstig eine sehr enge Anordnung mehrerer optischer Anschlüsse erlaubt.
Gemäß der Erfindung wird diese Aufgabe dadurch gelöst, daß die Kopplungseinrichtung als aus einem Kunststoff bestehender Formkörper ausgebildet ist, dessen Gestalt den Verlauf der Kopplungspfade zwischen dem anschlußseitigen Bereich und dem wandlerseitigen Bereich bestimmt.

Durch Ausgestaltung der Kopplungseinrichtung als Formkörper kann ausgangsseitig eine Bauraumgröße zur Verfügung gestellt werden, bei der das optische und/oder elektrische Übersprechen zwischen einander benachbarten Kopplungspfaden soweit reduziert ist, daß sowohl Sender als auch Empfänger angeordnet werden können. Gleichzeitig wirkt sich der größere Bauraum vorteilhaft im Hinblick auf die Wandlerjustage und die Wandlerdimensionierung aus.

Eine vorteilhafte Ausgestaltung der Erfindung, die ohne Spiegelflächen an der Kopplungseinrichtung auskommt und dadurch einen besonders einfachen Aufbau und reduzierte Transmissionsverluste aufweist, sieht vor, daß die Kopplungseinrichtung jeweils eine Grenzfläche zu einem optisch dichteren Medium aufweist, die jeweils einem optischen Anschluß zugewandt und derart ausgerichtet ist, daß sich die Abstände der Kopplungspfade zwischen den Anschlüssen und den zugeordneten optisch aktiven Zonen zu den optisch aktiven Zonen hin vergrößern.

Eine besonders starke Umlenkung der Kopplungspfade und damit eine besonders weite wandlerseitige Beabstandung der Kopplungspfade läßt sich nach einer vorteilhaften Fortbildung der Erfindung auf kleinstem Raum dadurch erreichen, daß die Kopplungseinrichtung mindestens eine Spiegelfläche aufweist, über die zumindest ein Kopplungspfad zwischen einem Anschluß und der zugeordneten optisch aktiven Zone derart verläuft, daß sich die Abstände der Kopplungspfade zwischen den Anschlüssen und den zugeordneten optisch aktiven Zonen zu den Zonen hin vergrößern.

Hinsichtlich der Strahlformung und der Strahlführung sehen weitere bevorzugte Ausgestaltungen der Erfindung vor, daß den Anschlüssen mindestens eine Linse der Kopplungseinrichtung zugewandt ist oder daß der jeweiligen optisch aktiven Zone mindestens eine Linse der Kopplungseinrichtung zugewandt ist.

Der für die Anordnung der Wandler zur Verfügung stehende Bauraum läßt sich nach einer vorteilhaften Weiterbildung der Erfindung dadurch besonders gut ausnutzen, daß die Kopplungseinrichtung in mehreren Dimensionen eine wandlerseitige Aufspreizung der Kopplungspfade bewirkt.

Fertigungstechnisch ist es bevorzugt, wenn die Kopplungseinrichtung einteilig ausgebildet ist. Besonders bevorzugt können die elektrooptischen Wandler und die Kopplungseinrichtung eine einstückige Baugruppe bilden.

Eine besonders einfache und bedarfsweise an entsprechende Standards anpaßbare Ausgestaltung der optischen Anschlüsse ist nach einer weiteren bevorzugten Fortbildung der Erfindung dadurch möglich, daß die Anschlüsse Teil einer optischen Steckvorrichtung sind, die zum Anschluß mehrerer Lichtwellenleiter eines Lichtwellenleiter-Steckverbinders ausgebildet ist.

Im Hinblick auf die Realisierung eingangs beschriebener Transceiver sieht eine weitere bevorzugte Ausgestaltung der Erfindung vor, daß die Anordnung einen als optischen Sender und einen als optischen Empfänger ausgebildeten Wandler umfaßt und daß die Wandler auf zwei separaten Schaltungsträgern angeordnet sind. Die Anordnung des Senders und des Empfängers auf separaten Schaltungsträgern ist insbesondere hinsichtlich der geschilderten Übersprecheffekte, der Fertigungs- und Aufbautechnik und der Prüfmöglichkeiten vorteilhaft.

Besonders schmale Bauformen sind nach einer weiteren vorteilhaften Fortbildung der Erfindung dadurch möglich, daß die separaten Schaltungsträger in Richtung der Lichtwellenleiter-Längsachsen und senkrecht zur Montageebene der Anordnung angeordnet sind.

Eine hinsichtlich der Wandleranordnung und der Verwendung von Wandlern mit vertikal abstrahlenden (z. B. sog. VCSEL) oder empfangenden optisch aktiven Zonen bevorzugte weitere Ausgestaltung der Erfindung sieht vor, daß die Kopplungseinrichtung die Kopplungspfade jeweils um 90° gegensinnig voneinander weg lenkt.

Die Erfindung wird nachfolgend anhand mehrerer Ausführungsbeispiele weiter erläutert; es zeigen:
Figuren 1 und 2 in Aufsicht und perspektivischer Darstellung eine erste erfindungsgemäße Anordnung,
Figuren 3 und 4 in Aufsicht und perspektivischer Darstellung eine auf der optischen Anschlußseite modifizierte Ausgestaltung der Ausführung nach den Figuren 1 und 2,
Figur 5 eine weitere erfindungsgemäße Anordnung und
Figuren 6 bis 9 erfindungsgemäße Anordnungen mit Kopplungseinrichtungen mit unterschiedlich geformten Linsenbereichen.

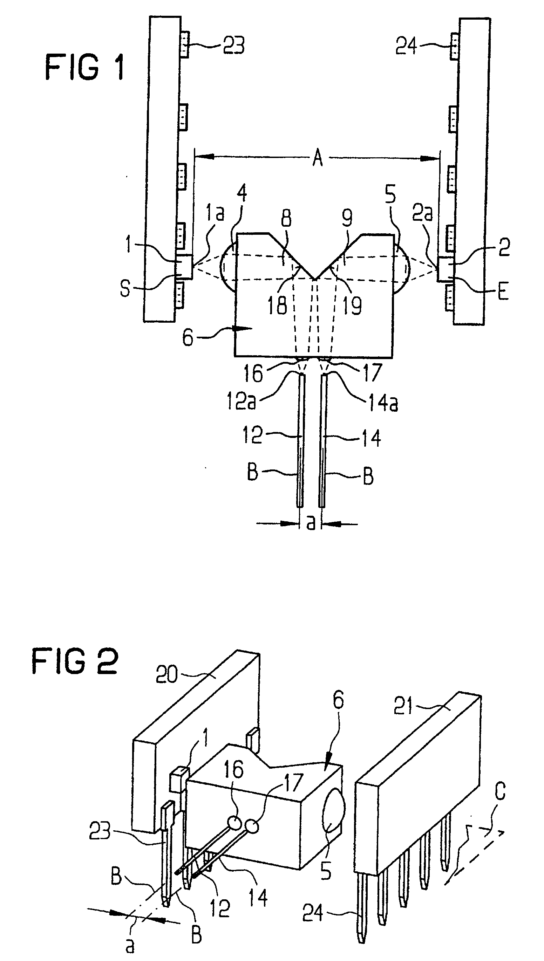

Nach den Figuren 1 und 2 enthält die elektrooptische Anordnung, die vorzugsweise in einem elektrooptischen Modul (Transceiver) Verwendung findet, zwei elektrooptische Wandler 1, 2, die als vertikal abstrahlender Laser-Sender S (VCSEL) und als vertikal empfangender optischer Empfänger E ausgebildet sind. Die Wandler haben jeweils eine die Wandlung elektrischer in optische bzw. optischer in elektrische Signale bewirkende optisch aktive Zone 1a, 2a. Die Zonen 1a, 2a sind einander zugewandt.

Linsen 4, 5 sind auf den Seitenflächen einer Kopplungseinrichtung 6 ausgebildet und können vorteilhafterweise auch einteilig als Bestandteil der Kopplungseinrichtung ausgebildet sein. Die Linsen 4, 5 sind den aktiven Zonen 1a bzw. 2a zugewandt und bewirken eine optimale Strahlkopplung an die Zonen 1a, 2a. Die Kopplungseinrichtung besteht bevorzugt aus einem Kunststoff, der für den verwendeten Wellenlängenbereich eine hohe optische Durchlässigkeit besitzt. Die Kopplungseinrichtung leitet die Strahlung bzw. Kopplungspfade 8, 9 zwischen jeweils einem der Wandler 1, 2 bzw. dessen optisch aktiver Zone 1a, 2a und dieser zugeordneten Lichtwellenleiterenden 12, 14. Die Enden 12, 14 bilden optische Anschlüsse zur Ankopplung nicht näher dargestellter Lichtwellenleiterkabel. Die Anschlüsse 12, 14 sind in einem mittleren Abstand a ihrer Längsachsen B beabstandet angeordnet und mit ihren jeweiligen stirnseitigen Endflächen 12a, 14a auf jeweils eine an der Kopplungseinrichtung 6 ausgebildete Linse 16, 17 ausgerichtet. Die Linsen 16, 17 sorgen dafür, daß die Strahldivergenz innerhalb der Kopplungseinrichtung 6 kleiner ist als zwischen der Linse 16, 17 und den Anschlüssen 12, 14.

Somit verlaufen die Kopplungspfade 8, 9 zwischen den Anschlüssen 12, 14 und den optischen aktiven Zonen 1a, 2a über die Kopplungseinrichtung 6. Dabei werden die Kopplungspfade 8, 9 bzw. die entlang der Kopplungspfade verlaufenden Strahlen an jeweils einer Spiegelfläche 18, 19 der Kopplungseinrichtung 6 um jeweils 90° voneinander weg abgelenkt. Die Strahlenbündel sind damit im Bereich der Zonen 1a, 2a gegenüber der durch die Anschlüsse 12, 14 vorgegebenen Beabstandung a erheblich voneinander weg gelenkt und damit in einem erheblich größeren Abstand A auf die Zonen 1a, 2a fokussierbar. Dadurch ist es möglich, den Abstand A der Zonen 1a, 2a voneinander wesentlich größer zu realisieren, als der Abstand a zwischen den Anschlüssen 12, 14 vorgibt.

Die Wandler 1, 2 sind auf separaten Schaltungsträgern 20, 21 angeordnet. Die Schaltungsträger 20, 21 tragen auch nicht näher dargestellte Ansteuerungs- und/oder Treiberschaltungen zur Ansteuerung des Wandlers 1 bzw. zur Aufbereitung von dem Wandler 2 gelieferter elektrischer Signale. An der der Kopplungseinrichtung zugewandten Oberfläche der Schaltungsträger 20, 21 sind Anschlußkontakte 23, 24 angeordnet, über die die Schaltungsträger bzw. die auf diesen angeordneten elektrischen Schaltungen kontaktierbar sind. Über die Anschlußkontakte 23 kann also beispielsweise eine elektrische Ansteuerung des Wandlers mit elektrischen Eingangssignalen erfolgen, die nach entsprechender Aufbereitung dem Wandler zugeführt und durch die aktive Zone 1a in optische Signale (Lichtsignale) umgewandelt werden und entlang des Kopplungspfades 8 zum Anschluß 12 gelangen. Die Schaltungsträger 20, 21 sind hochkant und in Richtung der Lichtwellenleiterlängsachsen B und damit senkrecht zur Montageebene oder Anschlußebene C der Anordnung orientiert. Die gesamte Anordnung ist vorzugsweise in ein nicht dargestelltes Modulgehäuse eingebracht.

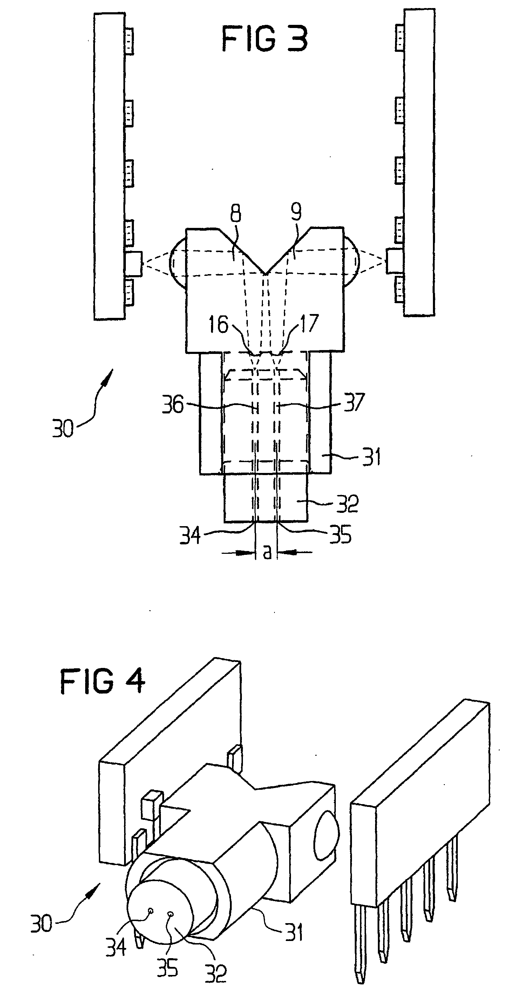

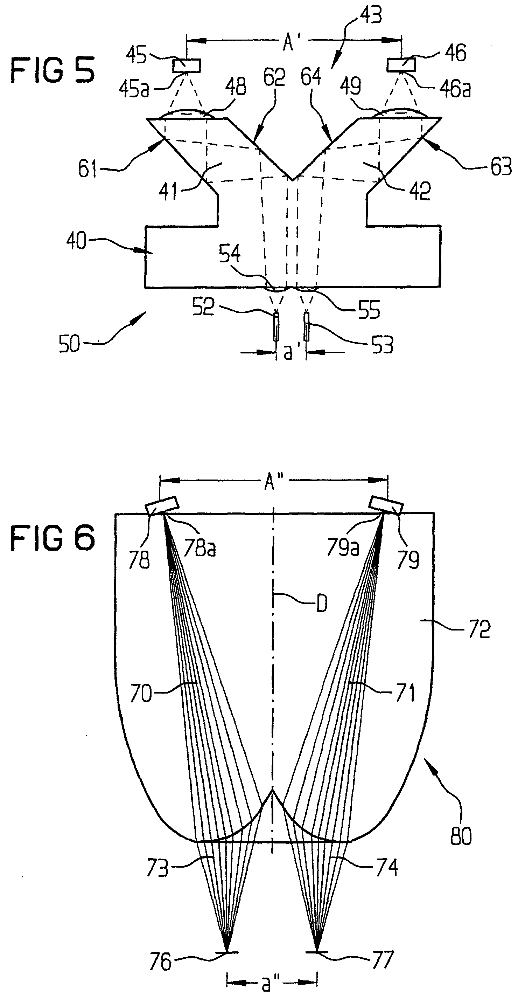

Aus den Figuren 3 und 4 geht eine Variante der in den Figuren 1 und 2 dargestellten Anordnung hervor, wobei nur der unterschiedlich ausgebildete Bereich nachfolgend näher beschrieben wird. Die Anordnung weist auf der Anschluß-Seite 30 eine Steckbucht 31 auf, in die ein nur andeutungsweise dargestellter Steckerstift 32 eingebracht ist. Der Steckerstift 32 enthält achsparallele Längsbohrungen 34, 35, die in dem gewünschten vorgegebenen Abstand (Raster) a der vorbeschriebenen Anschlüsse 12, 14 (Figur 1) beabstandet sind. Mit dem Lichtwellenleiterstecker 32 sind Enden anzukoppelnder Lichtwellenleiter 36, 37 in einfacher Weise lösbar gegenüber den Linsen 16, 17 und damit in bezug auf die Kopplungspfade 8, 9 positionierbar. Zwischen den (in den Figuren 3 und 4 nicht näher dargestellten) Lichtwellenleitern und den optisch aktiven Zonen 1a, 2a ist also auf diese Weise der vorbeschriebene Strahlengang realisierbar.

Figur 5 zeigt eine weitere Ausgestaltungsmöglichkeit einer erfindungsgemäßen Anordnung, die insbesondere durch eine veränderte Gestalt der Kopplungseinrichtung 40 und damit durch einen entsprechend veränderten Verlauf von Kopplungspfaden 41, 42 charakterisiert ist. Auch die Kopplungseinrichtung 40 weist sowohl auf der Seite ("Wandlerseite") 43 der nur schematisch angedeuteten und ohne weitere schaltungsträgerseitigen Elemente dargestellten Wandler 45, 46 Linsen 48, 49 auf, über die jeweils eine optimale Strahlfokussierung zwischen der Kopplungseinrichtung 40 und den jeweiligen optisch aktiven Zonen 45a, 46a der Wandler 45, 46 gewährleistet ist. Ferner sind in vorbeschriebener Art auf der Seite der Anschlüsse 52, 53 ("Anschlußseite" 50) Linsen 54, 55 vorgesehen, durch die die Strahldivergenz innerhalb der Kopplungseinrichtung 40 geringer wird als zwischen den Anschlüssen 52, 53 und den Linsen 54, 55. Der Kopplungskörper 40 weist für jeden Kopplungspfad 41, 42 zwei zur optischen Achse jeweils um 45° schräge Spiegelflächen 61, 62; 63, 64 auf, an denen die entlang der Kopplungspfade 41, 42 verlaufende Strahlung jeweils - und zwar gegensinnig - um 90° umgelenkt wird. Dadurch ergibt sich insgesamt eine deutlich erhöhte Beabstandung der wandlerseitigen Fokuspunkte der Kopplungspfade 41, 42, die in Figur 5 mit A' bezeichnet ist. Dieser Abstand A' der Fokuspunkte erlaubt eine Anordnung der aktiven Zonen 45a, 46a in einem weiteren Abstand als der Abstand a' der Anschlüsse 52, 53. Im Gegensatz zu den in den Figuren 1 bis 4 dargestellten Ausführungsbeispielen verlaufen die Kopplungspfade 41, 42 außerhalb der Kopplungseinrichtung 40 jeweils parallel.

Die Figuren 6 bis 9 zeigen unterschiedliche Ausgestaltungsmöglichkeiten einer Kopplungseinrichtung, wobei die übrigen Komponenten der Anordnung nur schematisch dargestellt sind.

Gemäß Figur 6 verlaufen Kopplungspfade 70, 71 jeweils über symmetrisch zur Mittenachse D einer Kopplungseinrichtung oder eines Kopplungskörpers 72 geneigte Linsenflächen 73, 74, wobei die Linsenflächen außeraxial beaufschlagt sind. Die Kopplungseinrichtung 72 besteht vorzugsweise aus einem für die optische Strahlung besonders durchlässigen Kunststoff und damit aus einem optisch dichterem Medium als die Umgebung. Die einem nur schematisch dargestellten optischen Anschluß 76, 77 zugewandte Linsenfläche oder Grenzfläche 73, 74 der Kopplungseinrichtung 72 ist derart ausgerichtet, daß sich der Abstand a" der Kopplungspfade 70, 71 zwischen den Anschlüssen 76, 77 und den zugeordneten optisch aktiven Zonen 78a, 79a der Wandler 78, 79 auf einen Abstand A" erweitern. Bevorzugt bilden die Wandler 78, 79 und die Kopplungseinrichtung 72 eine einstückige Baugruppe 80.

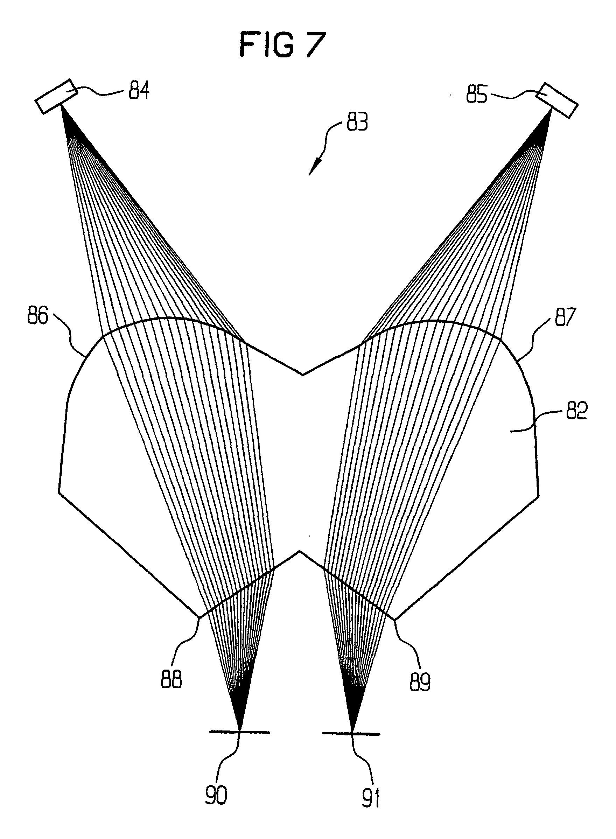

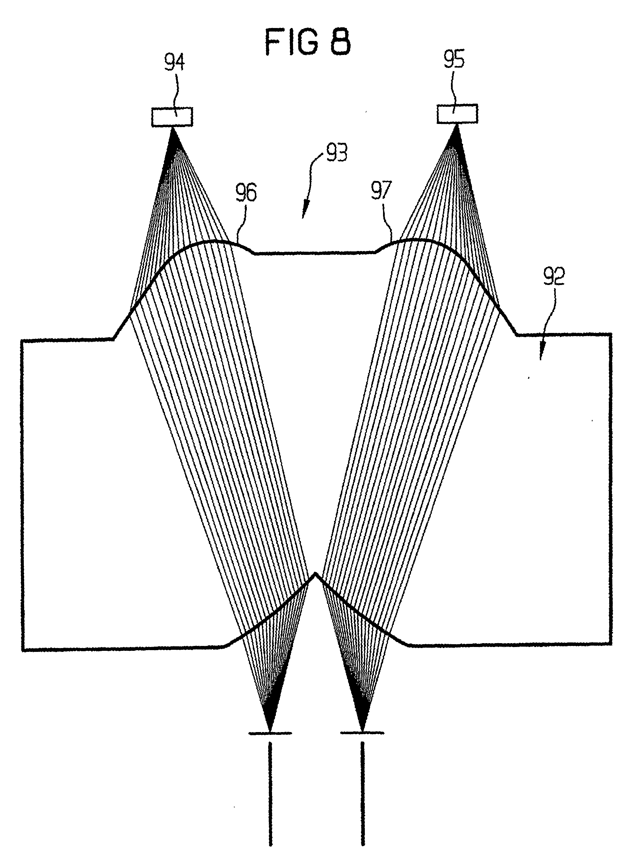

Die Figuren 7 und 8 zeigen weitere Gestaltungsmöglichkeiten von Kopplungseinrichtungen 82, 92, die auf der Seite 83, 93 der Wandler 84, 85; 94, 95 geformte und als Linsen wirkende Grenzflächen 86, 87; 96, 97 aufweisen.

Gemäß Figur 7 sind durch Brechung strahlablenkende Grenzflächen 88, 89 auf der Seite der Anschlüsse 90, 91 als ebene Grenzfläche ausgebildet, an der durch den Dichteunterschied die Kopplungspfade von der gemeinsamen Symmetrieebene F weggelenkt werden.

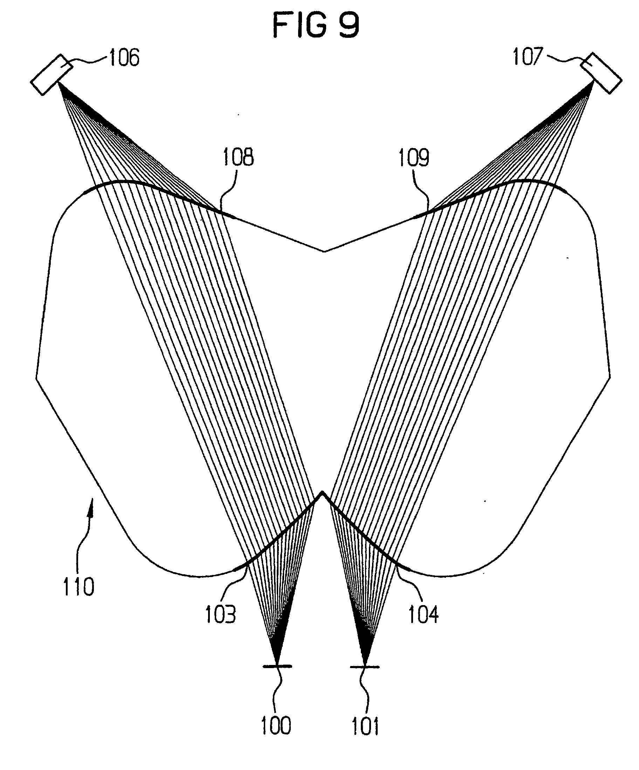

Dieser Effekt kann gemäß der in Figuren 8 und 9 gezeigten Ausgestaltungsformen noch weiter verstärkt werden, indem auch die den optischen Anschlüssen 100, 101 (Figur 9) zugewandten Grenzflächen 103, 104 linsenartig ausgebildet sind und den Wandlern 106, 107 zugewandte Grenzflächen 108, 109 der Kopplungseinrichtung 110 so ausgestaltet sind, daß die Kopplungspfade 112, 114 und damit der Strahlverlauf auch außerhalb der Kopplungseinrichtung noch weiter divergieren. Damit läßt sich bei kompakter Kopplungseinrichtung eine besonders weite Strahlbeabstandung auf der Wandlerseite erreichen. Durch geeignete Ausgestaltung der Kopplungseinrichtung können die Kopplungspfade wandlerseitig auch auf in zwei Dimensionen unterschiedliche Fokussierungsebenen fokussiert werden, so daß die entsprechenden aktiven Zonen durch wandlerseitige Aufweitung der Kopplungspfad-Abstände in unterschiedlichen Ebenen angeordnet sein können.

## Patentansprüche

1. Elektrooptische Anordnung
mit mindestens zwei elektrooptischen Wandlern (1, 2) mit jeweils einer optisch aktiven Zone (1a, 2a), die in einem Abstand A benachbart sind,
mit den Wandlern (1, 2) zugeordneten optischen Anschlüssen (12, 14), die als Anschlußenden oder Anschluß-Kopplungsflächen von einzelnen Lichtwellenleitern ausgebildet und in einem Abstand (a) benachbart sind, und
mit einer Kopplungseinrichtung (6), die einen anschlußseitigen Bereich (50) und mindestens einen wandlerseitigen Bereich (43) aufweist und über die optische Kopplungspfade (8, 9) zwischen den Anschlüssen (12, 14) und
den jeweils zugeordneten optisch aktiven Zonen (1a, 2a) verlaufen,
wobei der Abstand (A) zwischen zwei dem wandlerseitigen Bereich (43) zugeordneten optisch aktiven Zonen (1a, 2a) größer ist als der Abstand (a) zwischen den dem anschlußseitigen Bereich (50) zugeordneten Anschlüssen (12, 14),
**dadurch gekennzeichnet, daß**
die Kopplungseinrichtung (6) als aus einem Kunststoff bestehender Formkörper ausgebildet ist, dessen Gestalt den Verlauf der Kopplungspfade (8, 9) zwischen dem anschlußseitigen Bereich und dem wandlerseitigen Bereich bestimmt.

2. Anordnung nach Anspruch 1,
**dadurch gekennzeichnet, daß**
die Kopplungseinrichtung (6) Grenzflächen (73, 74) zu einem optisch dichteren Medium aufweist, von denen jeweils eine einem optischen Anschluß (76, 77) zugewandt und derart ausgerichtet ist, daß sich die Abstände der Kopplungspfade (70, 71) zwischen den Anschlüssen (76, 77) und den zugeordneten optisch aktiven Zonen (78a, 79a) zu diesen Zonen (78a, 79a) hin vergrößern.

3. Anordnung nach Anspruch 1 oder 2,
**dadurch gekennzeichnet, daß**
die Kopplungseinrichtung (6) mindestens eine Spiegelfläche (18, 19) aufweist, über die zumindest ein Kopplungspfad (8, 9) zwischen einem Anschluß (12, 14) und der zugeordneten optisch aktiven Zone (1a, 2a) derart verläuft, daß sich die Abstände der Kopplungspfade (8, 9) zwischen den Anschlüssen (12, 14) und den zugeordneten optisch aktiven Zonen (1a, 2a) zu den Zonen (1a, 2a) hin vergrößern.

4. Anordnung nach einem der vorangehenden Ansprüche,
**dadurch gekennzeichnet, daß**
den Anschlüssen (12, 14) mindestens eine Linse (16, 17) der Kopplungseinrichtung (6) zugewandt ist.

5. Anordnung nach einem der vorangehenden Ansprüche,
**dadurch gekennzeichnet, daß**
der jeweiligen optisch aktiven Zone (1a, 2a) mindestens eine Linse (4, 5) der Kopplungseinrichtung (6) zugewandt ist.

6. Anordnung nach einem der vorangehenden Ansprüche,
**dadurch gekennzeichnet, daß**
die Kopplungseinrichtung (110) in mehreren Dimensionen eine wandlerseitige Aufspreizung der Kopplungspfade (112, 114) bewirkt.

7. Anordnung nach einem der vorangehenden Ansprüche,
**dadurch gekennzeichnet, daß**
die Kopplungseinrichtung (6) einteilig ausgebildet ist.

8. Anordnung nach einem der vorangehenden Ansprüche,
**dadurch gekennzeichnet, daß**
die elektrooptischen Wandler (1, 2) und die Kopplungseinrichtung (6) eine einstückige Baugruppe bilden.

9. Anordnung nach einem der vorangehenden Ansprüche,
**dadurch gekennzeichnet, daß**
die Anschlüsse Teil einer optischen Steckvorrichtung (31) sind, die zum Anschluß mehrerer Lichtwellenleiter (36, 37) eines Lichtwellenleiter-Steckverbinders (32) ausgebildet ist.

10. Anordnung nach einem der vorangehenden Ansprüche,
**dadurch gekennzeichnet, daß**
die Anordnung einen als optischen Sender (S) und einen als optischen Empfänger (E) ausgebildeten Wandler (1, 2) umfaßt und daß die Wandler (1, 2) auf zwei separaten Schaltungsträgern (20,21) angeordnet sind.

11. Anordnung nach Anspruch 10,
**dadurch gekennzeichnet, daß**
die separaten Schaltungsträger (20, 21) in Richtung der Anschluß-Längsachsen (B) und senkrecht zur Montageebene (C) der Anordnung angeordnet sind.

12. Anordnung nach einem der vorangehenden Ansprüche, insbesondere nach Anspruch 10,
**dadurch gekennzeichnet, daß**
die Kopplungseinrichtung (6) die Kopplungspfade (8, 9) jeweils um 90° gegensinnig voneinander weg lenkt.

## Claims

1. Electrooptical arrangement having at least two electrooptical tranducers (1, 2) with in each case an optical active zone (1a, 2a), which are adjacent at a spacing A, having optical terminals (12, 14) which are assigned to the transducers (1, 2), are constructed as terminal ends or terminal coupling surfaces of individual optical conductors and are adjacent at a spacing (a), and having a coupling device (6) which has a region (50) on the terminal side and at least one region (43) on the transducer side, and via which coupling device optical coupling paths (8, 9) run between the terminals (12, 14) and the respectively assigned optically active zones (1a, 2a), the spacing (A) between two optically active zones (1a, 2a) assigned to the region (43) on the transducer side being greater than the spacing (a) between the terminals (12, 14) assigned to the region (50) on the terminal side, **characterized in that** the coupling device (6) is constructed as a moulded part made from plastic whose shape determines the course of the coupling paths (8, 9) between the region on the terminal side and the region on the transducer side.

2. Arrangement according to Claim 1, **characterized in that** the coupling device (6) has interfaces (73, 74) to an optically denser medium, of which in each case one faces an optical terminal (76, 77) and is aligned in such a way that the spacings of the coupling paths (70, 71) between the terminals (76, 77) and the assigned optically active zones (78a, 79a) increase towards these zones (78a, 79a).

3. Arrangement according to Claim 1 or 2, **characterized in that** the coupling device (6) has at least one reflecting surface (18, 19) via which at least one coupling path (8, 9) runs between a terminal (12, 14) and the assigned optically active zone (1a, 2a) in such a way that the spacings of the coupling paths (8, 9) between the terminals (12, 14) and the assigned optically active zones (1a, 2a) increase towards the zones (1a, 2a).

4. Arrangement according to one of the preceding claims, **characterized in that** at least one lens (16, 17) of the coupling device (6) faces the terminals (12, 14).

5. Arrangement according to one of the preceding claims, **characterized in that** at least one lens (4, 5) of the coupling device (6) faces the respective optically active zone (1a, 2a).

6. Arrangement according to one of the preceding claims, **characterized in that** the coupling device (110) effects a spreading of the coupling paths (112, 114) in a plurality of dimensions on the transducer side.

7. Arrangement according to one of the preceding claims, **characterized in that** the coupling device (6) is of unipartite construction.

8. Arrangement according to one of the preceding claims, **characterized in that** the electrooptical transducers (1, 2) and the coupling device (6) form a unipartite module.

9. Arrangement according to one of the preceding claims, **characterized in that** the terminals are part of an optical plug-in device (31) which is constructed for the purpose of connecting a plurality of optical conductors (36, 37) of an optical conductor plug-in connector (32).

10. Arrangement according to one of the preceding claims, **characterized in that** the arrangement comprises a transducer (1) constructed as an optical transmitter (S), and a transducer (2) constructed as an optical receiver (E), and **in that** the transducers (1, 2) are arranged on two separate circuit carriers (20, 21).

11. Arrangement according to Claim 10, **characterized in that** the separate circuit carriers (20, 21) are arranged in the direction of the terminal longitudinal axes (B) and perpendicular to the mounting plane (C) of the arrangement.

12. Arrangement according to one of the preceding claims, in particular according to Claim 10, **characterized in that** the coupling device (6) directs the coupling paths (8, 9) away from one another in opposite senses by 90° in each case.

## Revendications

1. Dispositif électro-optique
comprenant au moins deux transducteurs (1, 2) électro-optiques ayant respectivement une zone (1a, 2a) active optiquement qui sont voisines en étant à une distance A,
comprenant des raccords (12, 14) optiques associés aux transducteurs (1, 2), constitués sous la forme d'extrémités de raccordement ou de surfaces de couplage de raccordement de fibres optiques individuelles et voisins à une distance (a), et
comprenant un dispositif (6) de couplage, qui a une partie (50) du côté du raccord et au moins une partie (43) du côté du transducteur et par lequel passent des trajets (8, 9) optiques de couplage entre les raccords (12, 14) et les zones (1a, 2a) actives optiquement associées respectivement,
la distance (A) entre deux zones (1a, 2a) actives optiquement associées à la partie (43) du côté du transducteur étant plus grande que la distance (a) entre les raccords (12, 14) associés à la partie (50) du côté du raccord,
**caractérisé en ce que** le dispositif (6) de couplage est constitué sous la forme d'une pièce moulée en matière plastique dont la conformation détermine le tracé des trajets (8, 9) de couplage entre la partie du côté du raccord et la partie du côté du transducteur.

2. Dispositif suivant la revendication 1,
**caractérisé en ce que** le dispositif de couplage a des surfaces (73, 74) de démarcation avec un milieu plus dense optiquement, parmi lesquelles respectivement l'une est tournée vers un raccord (76, 77) optique et est dirigée de façon à ce que les intervalles des trajets (70, 71) de couplage entre les raccords (76, 77) et les zones (78a, 79a) actives optiquement associées deviennent plus grandes vers ces zones (78a, 79a).

3. Dispositif suivant la revendication 1 ou 2, **caractérisé en ce que** le dispositif (6) de couplage a au moins une surface (18, 19) de miroir sur laquelle au moins un trajet (8, 9) de couplage entre un raccord (12, 14) et la zone (1a, 2a) active optiquement qui est associée s'étend de sorte que les intervalles des trajets (8, 9) de couplage entre les raccords (12, 14) et les zones (1a, 2a) actives optiquement qui sont associées sont plus grands vers les zones (1a, 2a).

4. Dispositif suivant l'une des revendications précédentes, **caractérisé en ce qu'**au moins une lentille (16, 17) du dispositif (6) de couplage est tournée vers les raccords (12, 14).

5. Dispositif suivant l'une des revendications précédentes, **caractérisé en ce qu'**au moins une lentille (4, 5) du dispositif (6) de couplage est tournée vers la zone (1a, 2a) active optiquement respective.

6. Dispositif suivant l'une des revendications précédentes, **caractérisé en ce que** les dispositifs (110) de couplage provoquent dans plusieurs dimensions un écartement, du côté du transducteur, des trajets (112, 114) de couplage.

7. Dispositif suivant l'une des revendications précédentes, **caractérisé en ce que** le dispositif (6) de couplage est d'un seul tenant.

8. Dispositif suivant l'une des revendications précédentes, **caractérisé en ce que** les transducteurs (1, 2) électro-optiques et le dispositif (6) de couplage forment un module d'un seul tenant.

9. Dispositif suivant l'une des revendications précédentes, **caractérisé en ce que** les raccords font partie d'un dispositif (31) optique d'enfichage qui est constitué, pour le raccordement de plusieurs fibres optiques (36, 37), d'un connecteur (32) par enfichage de fibres optiques.

10. Dispositif suivant l'une des revendications précédentes, **caractérisé en ce que** le dispositif comprend un émetteur (1) constitué en émetteur (S) optique et un transducteur (2) constitué en récepteur (E) optique et **en ce que** les transducteurs (1, 2) sont disposés sur deux supports (20, 21) distincts de circuit.

11. Dispositif suivant la revendication 10, **caractérisé en ce que** les supports (20, 21) distincts de circuit sont disposés dans la direction des axes (B) longitudinaux du raccord, perpendiculairement au plan (C) de montage du dispositif.

12. Dispositif suivant l'une des revendications précédentes, notamment suivant la revendication 10, **caractérisé en ce que** le dispositif (6) de couplage dévie les trajets (8, 9) de couplage respectivement en sens inverse l'un de l'autre de 90°.
